# EUROPEAN PATENT SPECIFICATION

(11) **EP 2 787 672 B1**
(45) Date of publication and mention of the grant of the patent: **10.08.2016**
(21) Application number: 13305449.4
(22) Date of filing: 05.04.2013
(51) Int. Cl.: H04L 1/00, H04L 1/08

(54) **Downlink communication with repetition transmissions**
Abwärtsstreckenkommunikation mit Wiederholungsübertragung
Communication de liaison descendante avec répétition de transmissions

(43) Date of publication of application: 08.10.2014
(73) Proprietor: ALCATEL LUCENT, 92100 Boulogne-Billancourt (FR)
(72) Inventor: Wong, Shin Horng, Swindon, Wiltshire SN5 7DJ (GB); Baker, Matthew, Swindon, Wiltshire SN5 7DJ (GB); Zhang, Min, Swindon, Wiltshire SN5 7DJ (GB)
(74) Representative: Berthier, Karine

(56) References cited:
- US-A1- 2012 004 002
- RENESAS MOBILE EUROPE LTD: "Physical channels coverage enhancements for MTC", 3GPP DRAFT; R1-130423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 19 January 2013 (2013-01-19), XP050663706, Retrieved from the Internet: URL:http://www.3gpp.org/ftp/tsg_ran/WG1_RL 1/TSGR1_72/Docs/ [retrieved on 2013-01-19]
- NEW POSTCOM: "Proposals on Down Link Coverage Enhancement for Low Cost MTC", 3GPP DRAFT; R1-130194 PROPOSALS FOR DL COVERAGE ENHANCEMENT ON LC-MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. St Julian; 20130128 - 20130201 18 January 2013 (2013-01-18), XP050663361, Retrieved from the Internet: URL:http://www.3gpp.org/ftp/tsg_ran/WG1_RL 1/TSGR1_72/Docs/ [retrieved on 2013-01-18]

## Description

### FIELD OF THE INVENTION

The present invention relates to wireless telecommunications methods, a computer program product and network nodes.

### BACKGROUND

Wireless telecommunications systems are known. In a cellular system, radio coverage is provided to user equipment, for example, mobile phones, by areas known as cells. A base station is located in each cell to provide the radio coverage. User equipment in each cell receives information and data from the base station and transmits information and data to the base station.

Information and data transmitted by the base station to the user equipment occurs on channels of radio carriers known as downlink channels. Information and data transmitted by user equipment to the base station occurs on channels of radio carriers known as uplink channels. Although the deployment of base stations is largely controllable by the network operator, the deployment of user equipment is not. The deployment of user equipment within the network can cause unexpected consequences.

Renesas Mobile Europe Limited: "Physical channels coverage enhancements for MTC", 3GPP draft; R1-130423 discloses that the PRACH channel needs a 19dB improvement to satisfy enhanced coverage requirements. Since the transmit power is limited by regulation and there is limited room for power boosting, preamble sequence repetition seems necessary. Theoretically, 80 repetitions are needed for worst-case for a 19dB improvement.

US 2012/0004002 A1 discloses a technique to avoid interference between RACH and channels other than RACH even if a base station apparatus having a relatively large coverage is provided. In particular, a terminal apparatus adjusts a format of RACH and a length of guard time transmitted from a base station apparatus based on a configuration number broadcast through the broadcast channel to prevent interference between RACH and PUSCH and so forth.

New Postcom: "Proposals on downlink coverage enhancement for low-cost MTC", 3GPP draft; R1-130194 discloses that repetition presents potential problems for PDCCH and PDSCH, but is more ideal and impacts less on PBCH/PSS/SSS and that therefore it is proposed that repetition should be considered based on each physical channel.

Accordingly, it is desired to provide an improved technique for communicating with user equipment.

### SUMMARY

According to a first aspect, there is provided a wireless telecommunication network base station method as claimed in claim 1.

The first aspect recognizes that an increasing problem with the deployment of user equipment is that they can become deployed in areas suffering from high attenuation. This high attenuation can cause the user equipment to be unable to decode downlink configuration information, which is essential for being able to access appropriate downlink traffic. This means that when deployed in these areas of high attenuation, the user equipment is effectively unable to receive traffic from the base station. The first aspect also recognizes that existing standards fail to provide an adequate technique for providing this downlink configuration information in high attenuation deployments, which means that user equipment implementing those standards are unable to communicate with the network during such deployment. The first aspect further recognizes that whilst this is inconvenient for some user equipment when located in these high attenuation areas, coverage is restored when the user equipment moves to a lower attenuation area but that there is an emerging class of user equipment (such as machine type communication devices such as, for example, smart meters) which are immobile once installed; for those user equipment no network coverage is provided.

Existing solutions target a 20 dB coverage improvement for such devices. Repetition of a message at the physical layer is one technique providing such coverage improvement. In order to achieve a 20 dB improvement, the theoretical number of repetitions needed is 100 times more than currently used. In reality, this amount of repetition is likely going to need to be even higher due to imperfect channel estimation, fading, frequency error, etc. Although repetition is a simple way to improve the coverage, it is highly inefficient in utilizing the spectrum especially when the amount of repetitions is very high (in the hundreds).

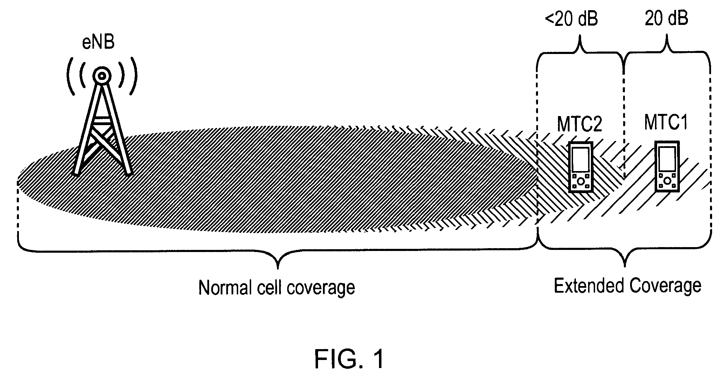

However, the first aspect recognizes that in an actual deployment, not all MTC devices would require 20 dB coverage improvements. Figure 1 shows the coverage of a cell which consists of the existing (termed as 'normal') coverage and the targeted coverage extension (due to MTC located at the cell edge and in a basement). For those MTC devices in the normal coverage, no additional coverage enhancement is required. For those MTC devices in the extended coverage region as shown Figure 1, not all MTC devices require as much as 20 dB coverage extension. Some MTC devices (e.g. MTC 2 located in the region shaded in Figure 1) will require coverage extension that is less than 20 dB and hence a message to/from these devices would require less repetitions compared to a MTC device in the 20 dB region. As an example, in Figure 1, MTC1 requires a 20 dB improvement and MTC2 requires a 13 dB coverage improvement, so the number of repetitions for MTC2 is 4 times less than that of MTC1. The amount of resource saving from using less than the maximum number of repetitions for MTC2 is significant since the maximum number of repetitions is large (i.e. in the hundreds), thereby improving spectral efficiency significantly. Hence, providing different levels of coverage extension for MTC devices is desirable. Also, different channels will experience different levels of attenuation and so will require different numbers of repetitions in each coverage extension region.

Accordingly, a base station method is provided. The method may comprise the step of encoding an index. The index may be encoded on a first downlink channel between the base station and user equipment. The index may identify a number of times that transmissions are repeated on one or more other channels between the base station and the user equipment. This provides an efficient and reliable technique for controlling and identifying the number of times that transmissions are repeated by other channels in order to extend their coverage. In other words, by utilizing a particular index, a desired amount of repetition can be made in order to achieve a desired amount of coverage extension.

In one embodiment, the index identifies a number of times that transmissions are repeated by each of the at least one other channel. Accordingly, the index may identify how many times the transmissions are repeated by each of the other channels in order to achieve a desired level of coverage. In this way, a single index may identify the repetitions used by each of a number of different channels, which reduces the amount of signalling overhead required to provide this information separately for each of the different channels.

In one embodiment, the index identifies that transmissions are repeated a different number of times by each of the at least one other channel. Accordingly, a single index may identify that transmissions are repeated differing numbers of times on each of the other channels. That is to say that the number of repetitions on the first channel may be a first value, whilst the number of repetitions on the second channel may be a second value, where the first and second values differ. Again, this enables a detailed set of different numbers of repetitions to be communicated in an efficient manner through the transmission of a single index.

In one embodiment, the index comprises one of a plurality of values, each value identifying a different number of times that that transmissions are repeated by the at least one other channel. Accordingly, the index may comprise different values, each different value being associated with a different set of repetitions to be made by each of the other channels. For example, a first value of the index may indicate one set of repetitions to be made by the channels, whilst another value may indicate a different set of repetitions to be made by each of the other channels. In one embodiment, each value is associated with a desired level of coverage, each value identifying a set of repetitions for the channels intended to provide reliable communication between the base station and user equipment when experiencing that level of coverage. For example, one value of the index may indicate a coverage extension of X dB and the index, when encoded with that value, indicates the number of repetitions required for each of the channels in order to achieve an extended coverage of X dB. Likewise, if a value of the index is intended to provide a coverage of YdB, then the set of repetitions for each of the channels associated with that value of the index is intended to provide reliable communications between the user equipment and the base station with an extended coverage of YdB.

In one embodiment, the other channels comprise at least one data channel and at least one control channel and the index identifies that transmissions are repeated a different number of times by each of the at least one data channel and the at least one control channel. Accordingly, the number of repetitions for both control channels and data channels may be specified using the index. It will be appreciated that the number of repetitions will typically differ.

In one embodiment, the index identifies that transmissions are repeated on at least one of a downlink and an uplink. Accordingly, the index may specify the number of repetitions performed on either or both uplink and downlink. In one embodiment, the numbers of repetitions on downlink and uplink may be one of the same and different.

In one embodiment, the index identifies a first number of repetitions for use in uplink transmissions for a first period and at least one subsequent number of repetitions for use in uplink transmission for at least one subsequent period. Accordingly, the index may identify an initial number of repetitions to be used in uplink, but also identify other numbers of repetitions to be used subsequently in uplink.

In one embodiment, the index identifies a first number of repetitions for use in a first attempted RACH procedure and at least one subsequent number of repetitions for use in at least one subsequent attempted RACH procedure. Accordingly, the index may identify an initial number of repetitions to be used on initiating a RACH procedure, but also specify other numbers of repetitions to be used should the RACH procedure fail.

In one embodiment, the method comprises selecting the index to serve different user equipment. Accordingly, different indexes may be used for different user equipment, which maybe located in different coverage areas.

In one embodiment, the method comprises selecting and encoding the index with another of the plurality of values. Accordingly, the value of the index may change dynamically in response to changing conditions.

In one embodiment, the step of selecting comprises selecting the index with another of the plurality of values in response to a request to change the value from user equipment. Accordingly, the user equipment may indicate to the base station that it wishes to change the value of the index. The base station may assess whether such a change is permitted and, if so, may select the requested value of the index.

In one embodiment, the method comprises transmitting channels with repetitions indicated by the index.

In one embodiment, the method comprises decoding received channels with repetitions indicated by the index.

In one embodiment, the first downlink channel comprises a physical broadcast channel.

In one embodiment, the other channels comprise at least one of Physical Downlink Control Channel, Physical Downlink Shared Channel, Physical Uplink Control Channel, Physical Uplink Shared Channel and Physical Random Access Channel.

In one embodiment, in the absence of an encoded index, a default value of the index is utilised.

According to a second aspect there is provided a wireless telecommunication network base station as claimed in claim 11.

In one embodiment, the index identifies a number of times that transmissions are repeated by each of the at least one other channel.

In one embodiment, the index identifies that transmissions are repeated a different number of times by each of the at least one other channel.

In one embodiment, the index comprises one of a plurality of values, each value identifying a different number of times that that transmissions are repeated by the at least one other channel.

In one embodiment, the other channels comprise at least one data channel and at least one control channel and the index identifies that transmissions are repeated a different number of times by each of the at least one data channel and the at least one control channel.

In one embodiment, the index identifies that transmissions are repeated on at least one of a downlink and an uplink. In one embodiment, the numbers of repetitions on downlink and uplink may be one of the same and different.

In one embodiment, the index identifies a first number of repetitions for use in uplink transmissions for a first period and at least one subsequent number of repetitions for use in uplink transmission for at least one subsequent period.

In one embodiment, the index identifies a first number of repetitions for use in a first attempted RACH procedure and at least one subsequent number of repetitions for use in at least one subsequent attempted RACH procedure.

In one embodiment, the base station comprises selecting logic operable to select the index to serve different user equipment.

In one embodiment, the selecting logic is operable to select and the encoding logic is operable to encode the index with another of the plurality of values.

In one embodiment, the selecting logic is operable to select the index with another of the plurality of values in response to a request to change the value from user equipment.

In one embodiment, the base station comprises transmission logic operable to transmit channels with repetitions indicated by the index.

In one embodiment, the base station comprises decoding logic operable to decode received channels with repetitions indicated by the index.

In one embodiment, the first downlink channel comprises a physical broadcast channel.

In one embodiment, the other channels comprise at least one of Physical Downlink Control Channel, Physical Downlink Shared Channel, Physical Uplink Control Channel, Physical Uplink Shared Channel and Physical Random Access Channel..

In one embodiment, in the absence of an encoded index, a default value of the index is utilised.

According to a third aspect, there is provided a wireless telecommunication network user equipment method as claimed in claim 12.

In one embodiment, the index identifies a number of times that transmissions are repeated by each of the at least one other channel.

In one embodiment, the index identifies that transmissions are repeated a different number of times by each of the at least one other channel.

In one embodiment, the index comprises one of a plurality of values, each value identifying a different number of times that that transmissions are repeated by the at least one other channel.

In one embodiment, the other channels comprise at least one data channel and at least one control channel and the index identifies that transmissions are repeated a different number of times by each of the at least one data channel and the at least one control channel.

In one embodiment, the index identifies that transmissions are repeated on at least one of a downlink and an uplink. In one embodiment, the numbers of repetitions on downlink and uplink may be one of the same and different.

In one embodiment, the index identifies a first number of repetitions for use in uplink transmissions for a first period and at least one subsequent number of repetitions for use in uplink transmission for at least one subsequent period.

In one embodiment, the index identifies a first number of repetitions for use in a first attempted RACH procedure and at least one subsequent number of repetitions for use in at least one subsequent attempted RACH procedure.

In one embodiment, the method comprises decoding the index with another of the plurality of values.

In one embodiment, the method comprises transmitting a request to change the value of the index.

In one embodiment, the method comprises transmitting channels with repetitions indicated by the index.

In one embodiment, the method comprises decoding received channels with repetitions indicated by the index.

In one embodiment, the first downlink channel comprises a physical broadcast channel.

In one embodiment, the other channels comprise at least one of Physical Downlink Control Channel, Physical Downlink Shared Channel, Physical Uplink Control Channel, Physical Uplink Shared Channel and Physical Random Access Channel..

In one embodiment, in the absence of an encoded index, a default value of the index is utilised.

According to a fourth aspect, there is provided a wireless telecommunication network user equipment as claimed in claim 13.

In one embodiment, the index identifies a number of times that transmissions are repeated by each of the at least one other channel.

In one embodiment, the index identifies that transmissions are repeated a different number of times by each of the at least one other channel.

In one embodiment, the index comprises one of a plurality of values, each value identifying a different number of times that that transmissions are repeated by the at least one other channel.

In one embodiment, the other channels comprise at least one data channel and at least one control channel and the index identifies that transmissions are repeated a different number of times by each of the at least one data channel and the at least one control channel.

In one embodiment, the index identifies that transmissions are repeated on at least one of a downlink and an uplink. In one embodiment, the numbers of repetitions on downlink and uplink may be one of the same and different.

In one embodiment, the index identifies a first number of repetitions for use in uplink transmissions for a first period and at least one subsequent number of repetitions for use in uplink transmission for at least one subsequent period.

In one embodiment, the index identifies a first number of repetitions for use in a first attempted RACH procedure and at least one subsequent number of repetitions for use in at least one subsequent attempted RACH procedure.

In one embodiment, the decoding logic is operable to decode the index with another of the plurality of values.

In one embodiment, the user equipment comprises transmission logic operable to transmit a request to change the value of the index.

In one embodiment, the transmission logic is operable to transmit channels with repetitions indicated by the index.

In one embodiment, the decoding logic is operable to decode received channels with repetitions indicated by the index.

In one embodiment, the first downlink channel comprises a physical broadcast channel.

In one embodiment, the other channels comprise at least one of Physical Downlink Control Channel, Physical Downlink Shared Channel, Physical Uplink Control Channel, Physical Uplink Shared Channel and Physical Random Access Channel..

In one embodiment, in the absence of an encoded index, a default value of the index is utilised.

According to a fifth aspect, there is provided a computer program product operable, when executed on a computer, to perform the method steps of the first or the third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the coverage of a cell which consists of an existing coverage and a targeted coverage extension; and
Figure 2 is a flow chart illustrating the procedure followed to connect an MTC device to an eNB according to one embodiment.

### DESCRIPTION OF THE EMBODIMENTS

### Overview

Before discussing the embodiments in any more detail, first an overview will be provided. Embodiments recognise that in the absence of increasing the transmit power, the simplest method of extending the coverage is to perform repetition of the physical channels. Embodiments introduce a repetition (or coverage) index, where each index points to a specific repetition characteristic. A repetition characteristic gives typically the amount of repetition for all the physical channels except for the primary and secondary synchronization signals (PSS/ SSS) and physical broadcast channel (PBCH). The repetition index is typically broadcast on a broadcast channel. This broadcasted repetition index indicates the amount of repetition to be used on multiple channels, the aim being to provide sufficient repetition for an intended coverage level. For example, in order to achieve a coverage extension of 16dB, the repetition index may indicate a first number of repetitions for a control channel and a second number of repetitions for a data channel. Where the repetition index is not broadcast or is omitted, a default value of the repetition index may be assumed.

Embodiments recognise that that the arrangement of the PBCH for MTC coverage extension is to be redesigned. Consequently, the PBCH will need to be repeated. The number of repetitions performed on the PBCH need not match the repetition characteristic of any of the channels indicated by the repetition index. For example, the PBCH maybe configured for coverage extension of 20dB, whilst the channels whose repetition levels are indicated by the repetition index may be configured for coverage extension of only 16dB. This can be used, for example, when a base station (eNB) repeats the PBCH such that all MTC devices in a coverage hole of up to 20 dB can attach to it (but not all MTC devices can connect to it). However, the eNB may wish to phase its services to the MTC devices by first serving MTC devices up to a 10 dB coverage extension, followed by those at 16 dB and then those at 20 dB. This can be accomplished by setting the maximum repetition index according to the intended coverage level.

In one embodiment, if the PBCH used for MTC coverage extension (i.e. the redesigned PBCH) did not contain a maximum repetition index, then a default repetition index is used as the maximum repetition index. An example of a default repetition index is the highest repetition index (i.e. corresponding to the largest coverage extension of 20 dB).

In one embodiment, the uplink channels and downlink channels use different repetition indices. That is, the uplink channels may have a repetition characteristic that has a different targeted coverage to that of the downlink. This embodiment may be useful if the uplink and downlink radio have very different characteristics or if the uplink and downlink are served by different nodes (e.g. the uplink is served by a small cell whilst the downlink is served by a macro cell).

In one embodiment, the repetition index can be changed whilst the MTC device is connected. This is useful if the MTC device has a more favourable coverage than that broadcast by the eNB and hence the MTC device may request (e.g. during a radio resource connect (RRC) Connection) to change the repetition index to one that has fewer number of repetitions in the physical channel. However, the eNB may choose not to obey the MTC device's request to change its repetition characteristic (e.g. the eNB may wish to change the power spectral density instead). Similarly, the eNB may change the (uplink) repetition index if it deemed that the MTC device can benefit from such a change. The change to the repetition index can be done via RRC signalling.

### Repetition Index - Downlink

Table 1 shows an example of the repetition index values and their corresponding repetition characteristics for some downlink channels. Each repetition characteristics (indicated by a repetition index) would give the amount of repetitions required for each downlink physical channel. Each repetition index would correspond to approximately a required coverage extension.

**Table 1: Repetition index and characteristic for downlink physical channels**

| **Repetition Index** | **Amount of Repetition** | | **Coverage Ext (dB) (for information only-not explicitly indicated by the repetition index)** |
|---|---|---|---|
| | **PDCCH** | **PDSCH** | |
| 0 | 1 | 1 | 0 |
| 1 | 3 | 4 | 10 |
| 2 | 12 | 14 | 16 |
| 3 | 29 | 34 | 20 |

### Repetition Index - Uplink

Table 2 shows an example of the repetition index values and their corresponding repetition characteristics for uplink channels. Each repetition characteristic gives the amount of repetition required for each uplink physical channel. For the physical random access channel (PRACH), three different levels of repetitions are given for each repetition characteristic. This is to allow the MTC device to use an initial (lower) repetition level for PRACH and, if that fails, to proceed to a higher level of repetition.

**Table 2: Repetition index and characteristics for uplink physical channels**

| **Repetition Index** | **Am ount of Repetition** | | | | | **Coverage Ext (dB) (for information only - not explicitly indicated by the repetition index)** |
|---|---|---|---|---|---|---|
| | **PUCCH** | **PUSCH** | **PRACH** | | | |
| | | | **1st** | **2nd** | **3rd** | |
| 0 | 1 | 1 | N/A | N/A | N/A | 0 |
| 1 | 3 | 10 | 2 | 4 | 8 | 10 |
| 2 | 9 | 40 | 8 | 16 | 32 | 16 |
| 3 | 23 | 100 | 20 | 40 | 80 | 20 |

### Example Operation

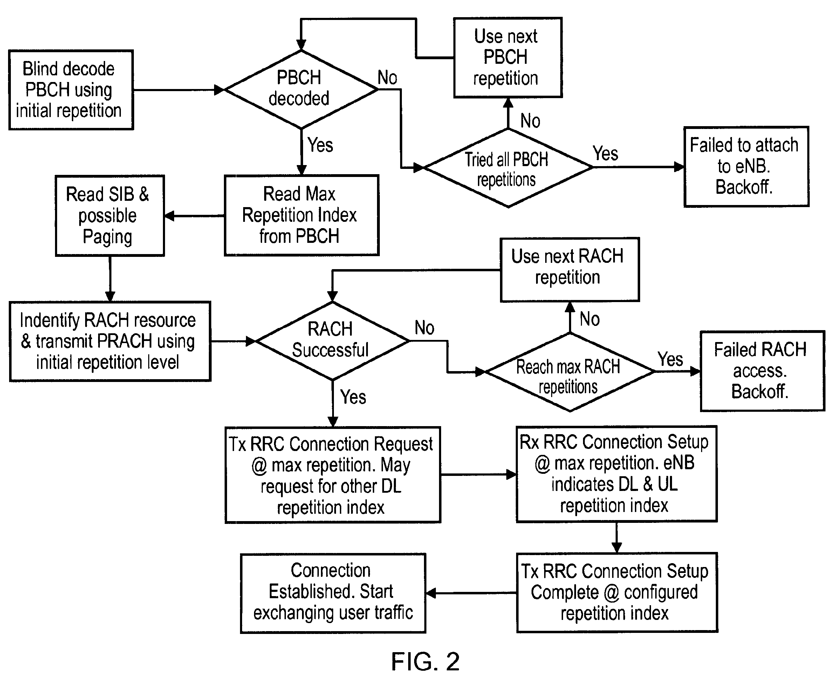

Figure 2 is a flow chart illustrating the procedure followed to connect an MTC device to an eNB. In this example it is assumed that the eNB sets its repetition index to 2 (corresponding to a 16 dB coverage extension). This repetition index is sent using the PBCH. Different levels of repetitions can be used for PBCH to target different levels of coverage. The level of repetitions used on the PBCH is summarized in Table 3. The PBCH is repeated for the level required for 16 dB of coverage extension which in this example is six times. It will be appreciated that the repetition level for PBCH need not correspond to the maximum repetition index.

**Table 3: PBCH repetition**

| **PBCH Repetition** | **Coverage Ext (dB)** |
|---|---|
| 1 | 0 |
| 2 | 10 |
| 6 | 16 |
| 15 | 20 |

In this example, two MTC devices, MTC1 and MTC2 are in an 8 dB and an 18 dB coverage hole, respectively. With reference to the procedure in Figure 2, the following steps are performed:
MTC1 attempts to blindly decode the PBCH assuming a 2x repetition and successfully decodes the PBCH.

Meanwhile MTC2 attempts to blind decode the PBCH assuming a 6x repetition but fails to decode the PBCH. MTC2 then tries the next repetition level, i.e. 15x, in which case it will fail. Having reached the maximum possible repetition level on PBCH, MTC2 failed to attach to the eNB and would retry at another time (hoping that the eNB would increase its coverage).

MTC1 reads the repetition index from PBCH (i.e., repetition index = 2)

MTC1 attempts to decode the SIBs using 12x and 14x repetitions on the Physical Downlink Control Channel (PDCCH) and Physical Downlink Shared Channel (PDSCH) respectively as per repetition index of 2 (see Table 1). From the SIB it extracts the set of RACH resource where it can perform repetition of its PRACH.

MTC1 transmits its PRACH with 8x repetitions. It fails the PRACH process after failing to receive any response from the network. It then uses the next level of repetition at 16×, in which case it successfully gets a response from the network. The RAR (Random Access Response) carried by the PDSCH is repeated 14x, which corresponds to the max repetition index.

MTC1 proceeds to send a RRC Connection Request. In the RRC Connection Request, it indicates that it prefers a downlink repetition index of 1 (since it is in a coverage hole less than 10 dB but more than 0 dB). The RRC Connection Request is sent using the Physical Uplink Shared Channel (PUSCH) which is repeated 40x.

The eNB response with a RRC Connection Setup message, indicating that it can accept the UE repetition index of 1. In addition to that the eNB indicates that the UE uses an uplink repetition index of 1. The RRC Connection Setup message is repeated 14x, i.e. corresponding to the max repetition index, since at this point the UE still have not got the OK to decode the PDSCH using repetition index of 1 (i.e. 4x)

MTC1 sends its RRC Connection Setup Complete message to the eNB using PUSCH using 10× repetitions, which corresponds to repetition index of 1.

The exchanges of messages would therefore use repetition characteristic corresponding to repetition index 1 in the uplink and downlink.

It should be noted that:
The eNB decides the final repetition index in the downlink for the UE. For example, if the MTC device asks for a downlink repetition index of 3, the eNB may give it a repetition index of 2 but then increase its transmission power accordingly to achieve the desired coverage.

The downlink repetition index and uplink repetition index need not be the same. The requested downlink repetition index from the UE may be sent using a different RRC message, e.g. it can be sent using the RRC Connection Setup Complete message.

This method allows different level of coverage extension to be managed by the eNB by using a maximum repetition index. Furthermore it can fine tune the coverage on a per MTC device basis.

Allowing different level of coverage improves the spectral efficiency compared to a single level of coverage extension.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunication network base station (eNB) method, comprising:
encoding, on a first downlink channel between said base station and user equipment (MTC1, MTC2), an index identifying a number of times that transmissions are repeated by a plurality of other channels between said base station and user equipment wherein said index identifies a number of times that transmissions are repeated by each of said plurality of other channels.

2. The method of claim 1, wherein said index identifies that transmissions are repeated a different number of times by each of plurality of other channels.

3. The method of any preceding claim, wherein said index comprises one of a plurality of values, each value identifying a different number of times that that transmissions are repeated by said plurality of other channels.

4. The method of any preceding claim, wherein said other channels comprise at least one data channel and at least one control channel and said index identifies that transmissions are repeated a different number of times by each of said at least one data channel and said at least one control channel.

5. The method of any preceding claim, wherein said index identifies that transmissions are repeated on at least one of a downlink and an uplink.

6. The method of any preceding claim, wherein said index identifies a first number of repetitions for use in uplink transmissions for a first period and at least one subsequent number of repetitions for use in uplink transmission for at least one subsequent period.

7. The method of any preceding claim, wherein said index identifies a first number of repetitions for use in a first attempted RACH procedure and at least one subsequent number of repetitions for use in at least one subsequent attempted RACH procedure.

8. The method of any preceding claim, comprising:
selecting said index to serve different user equipment.

9. The method of any preceding claim, comprising:
selecting and encoding said index with another of said plurality of values.

10. The method claim 10, wherein said step of selecting comprises selecting said index with another of said plurality of values in response to a request to change said value from user equipment.

11. A wireless telecommunication network base station, comprising:
encoding logic operable to encode, on a first downlink channel between said base station and user equipment, an index identifying a number of times that transmissions are repeated by a plurality of other channels between said base station and user equipment wherein said index identifies a number of times that transmissions are repeated by each of said plurality of other channels.

12. A wireless telecommunication network user equipment method, comprising:
decoding, on a first downlink channel between a base station and said user equipment, an index identifying a number of times that transmissions are repeated by a plurality of other channels between said base station and said user equipment wherein said index identifies a number of times that transmissions are repeated by each of said plurality of other channels.

13. Wireless telecommunication network user equipment, comprising:
decoding logic operable to decode, on a first downlink channel between a base station and said user equipment, an index identifying a number of times that transmissions are repeated by a plurality of other channels between said base station and said user equipment wherein said index identifies a number of times that transmissions are repeated by each of said plurality of other channels.

14. A computer program product operable, when executed on a computer, to perform the method steps of any one of claims 1 to 10 or 12.

## Patentansprüche

1. Verfahren für eine drahtlose Telekommunikationsnetz-Basisstation (eNB), umfassend:
das Codieren eines Indexes auf einem ersten Downlink-Kanal zwischen besagter Basisstation und einem Benutzergerät (MTC₁, MTC₂), wobei der Index eine Anzahl von Malen angibt, wie oft Übertragungen von einer Vielzahl weiterer Kanäle zwischen besagter Basisstation und dem Benutzergerät wiederholt werden, wobei besagter Index eine Anzahl von Malen angibt, wie oft besagte Übertragungen von einem jeden aus besagter Vielzahl weiterer Kanäle wiederholt werden.

2. Verfahren nach Anspruch 1, wobei besagter Index angibt, dass Übertragungen von einem jeden aus der Vielzahl weiterer Kanäle eine verschiedene Anzahl von Malen wiederholt werden.

3. Das Verfahren nach einem jeglichen der vorgenannten Ansprüche, wobei besagter Index einen aus einer Vielzahl von Werten umfasst, wobei jeder Wert eine verschiedene Anzahl von Malen angibt, wie oft besagte Übertragungen von besagter Vielzahl weiterer Kanäle wiederholt werden.

4. Das Verfahren nach einem jeglichen der vorgenannten Ansprüche, wobei besagte weitere Kanäle mindestens einen Datenkanal und mindestens einen Steuerkanal umfassen und besagter Index angibt, dass die Übertragungen von einem jeden besagten, mindestens einen Datenkanal und mindestens einen Steuerkanal verschieden oft wiederholt werden.

5. Das Verfahren nach einem jeglichen der vorgenannten Ansprüche, wobei besagter Index angibt, dass die Übertragungen mindestens entweder auf einem Downlink-Kanal oder auf einem Uplink-Kanal wiederholt werden.

6. Das Verfahren nach einem jeglichen der vorgenannten Anspruche, wobei besagter Index eine erste Anzahl von Wiederholungen für die Anwendung in Uplink-Übertragungen für einen ersten Zeitraum und mindestens eine darauffolgende Anzahl von Wiederholungen für die Anwendung in Uplink-Übertragungen für mindestens einen darauffolgenden Zeitraum angibt.

7. Das Verfahren nach einem jeglichen der vorgenannten Ansprüche, wobei besagter Index eine erste Anzahl von Wiederholungen für die Anwendung in einem zuerst versuchten RACH-Verfahren und mindestens eine darauffolgende Anzahl von Wiederholungen für die Anwendung in mindestens einem darauffolgend versuchten RACH-Verfahren angibt.

8. Das Verfahren nach einem beliebigen der vorstehenden Ansprüche, umfassend:
das Auswählen besagten Indexes für das Bedienen verschiedener Benutzergeräte.

9. Das Verfahren nach einem beliebigen der vorstehenden Ansprüche, umfassend:
Das Auswählen und Codieren besagten Indexes mit einem weiteren aus besagter Vielzahl von Werten.

10. Das Verfahren nach Anspruch 10, wobei besagter Auswahlschritt das Auswählen besagten Indexes mit einem weiteren aus besagter Vielzahl von Werten in Reaktion auf eine Anfrage zur Änderung besagten Werts seitens eines Benutzergeräts umfasst.

11. Basisstation eines drahtlosen Telekommunikationsnetzes, umfassend:
das Codieren einer Logik, die ausgelegt ist für das Codieren eines Indexes auf einem ersten Downlink-Kanal zwischen besagter Basisstation und einem Benutzergerät, wobei der Index eine Anzahl von Malen angibt, wie oft Übertragungen von einer Vielzahl weiterer Kanäle zwischen besagter Basisstation und dem Benutzergerät wiederholt werden, wobei besagter Index eine Anzahl von Malen angibt, wie oft besagte Übertragungen von einem jeden aus besagter Vielzahl weiterer Kanäle wiederholt werden.

12. Verfahren für ein Benutzergerät eines drahtlosen Telekommunikationsnetzes, umfassend:
das Decodieren eines Indexes auf einem ersten Downlink-Kanal zwischen einer Basisstation und besagtem Benutzergerät, wobei der Index eine Anzahl von Malen angibt, wie oft Übertragungen von einer Vielzahl weiterer Kanäle zwischen besagter Basisstation und besagtem Benutzergerät wiederholt werden, wobei besagter Index eine Anzahl von Malen angibt, wie oft besagte Übertragungen von einem jeden aus besagter Vielzahl weiterer Kanäle wiederholt werden.

13. Benutzergerät eines drahtlosen Telekommunikationsnetzes, umfassend:
Decodierungslogik, ausgelegt für das Decodieren eines Indexes auf einem ersten Downlink-Kanal zwischen einer Basisstation und besagtem Benutzergerät, wobei der Index eine Anzahl von Malen angibt, wie oft Übertragungen von einer Vielzahl weiterer Kanäle zwischen besagter Basisstation und besagtem Benutzergerät wiederholt werden, wobei besagter Index eine Anzahl von Malen angibt, wie oft besagte Übertragungen von einem jeden aus besagter Vielzahl weiterer Kanäle wiederholt werden.

14. Computerprogramm-Produkt, dafür ausgelegt, um bei dessen Ausführung auf einem Computer die Verfahrensschritte gemäß einem beliebigen der Ansprüche 1 bis 10 oder 12 auszuführen.

## Revendications

1. Procédé pour station de base (eNB) de réseau de télécommunications sans fil, comprenant l'étape suivante :
coder, sur un premier canal de liaison descendante entre ladite station de base et un équipement d'utilisateur (MTC₁, MTC₂), un indice identifiant un nombre de répétitions de transmissions par une pluralité d'autres canaux entre ladite station de base et l'équipement d'utilisateur, ledit indice identifiant un nombre de répétitions des transmissions par chacun de ladite pluralité d'autres canaux.

2. Procédé selon la revendication 1, dans lequel ledit indice identifie le fait que les transmissions sont répétées un nombre de fois différent par chacun de la pluralité d'autres canaux.

3. Procédé selon l'une quelconque des revendications précédentes, dans lequel ledit indice comprend l'une d'une pluralité de valeurs, chaque valeur identifiant un nombre différent de répétitions des transmissions par ladite pluralité d'autres canaux.

4. Procédé selon l'une quelconque des revendications précédentes, dans lequel lesdits autres canaux comprennent au moins un canal de données et au moins un canal de commande et ledit indice identifie un nombre différent de répétitions des transmissions par chacun dudit canal de données et dudit canal de commande.

5. Procédé selon l'une quelconque des revendications précédentes, dans lequel ledit indice identifie le fait que les transmissions sont répétées sur au moins l'une d'une liaison descendante et d'une liaison montante.

6. Procédé selon l'une quelconque des revendications précédentes, dans lequel ledit indice identifie un premier nombre de répétitions à utiliser dans les transmissions en liaison montante pendant une première période et au moins un nombre suivant de répétitions à utiliser dans une transmission en liaison montante pendant au moins une période suivante.

7. Procédé selon l'une quelconque des revendications précédentes, dans lequel ledit indice identifie un premier nombre de répétitions à utiliser dans une première procédure de canal d'accès aléatoire et au moins un nombre suivant de répétitions à utiliser dans au moins une procédure de canal d'accès aléatoire suivante.

8. Procédé selon l'une quelconque des revendications précédentes, comprenant l'étape suivante :
sélectionner ledit indice afin qu'il desserve différents équipements d'utilisateur.

9. Procédé selon l'une quelconque des revendications précédentes, comprenant l'étape suivante :
sélectionner et coder ledit indice avec une autre de ladite pluralité de valeurs.

10. Procédé selon la revendication 10, dans lequel ladite étape de sélection comprend la sélection dudit indice avec une autre de ladite pluralité de valeurs en réponse à une demande de changement de ladite valeur provenant de l'équipement d'utilisateur.

11. Station de base de réseau de télécommunications sans fil, comprenant :
une logique de codage pouvant fonctionner pour coder, sur un premier canal de liaison descendante entre ladite station de base et l'équipement d'utilisateur, un indice identifiant un nombre de répétitions de transmissions par une pluralité d'autres canaux entre ladite station de base et l'équipement d'utilisateur, dans laquelle ledit indice identifie un nombre de répétitions des transmissions par chacun de ladite pluralité d'autres canaux.

12. Procédé pour équipement d'utilisateur de réseau de télécommunications sans fil, comprenant l'étape suivante :
décoder, sur un premier canal de liaison descendante entre une station de base et ledit équipement d'utilisateur, un indice identifiant un nombre de répétitions de transmissions par une pluralité d'autres canaux entre ladite station de base et ledit équipement d'utilisateur, dans lequel ledit indice identifie un nombre de répétitions des transmissions par chacun de ladite pluralité d'autres canaux.

13. Équipement d'utilisateur de réseau de télécommunications sans fil, comprenant :
une logique de décodage pouvant fonctionner pour décoder, sur un premier canal de liaison descendante entre une station de base et ledit équipement d'utilisateur, un indice identifiant un nombre de répétitions de transmissions par une pluralité d'autres canaux entre ladite station de base et ledit équipement d'utilisateur, dans lequel ledit indice identifie un nombre de répétitions des transmissions par chacun de ladite pluralité d'autres canaux.

14. Produit de programme informatique pouvant fonctionner, lorsqu'il est exécuté sur un ordinateur, pour exécuter les étapes de procédé selon l'une quelconque des revendications 1 à 10 ou 12.
